# EUROPÄISCHE PATENTSCHRIFT

(11) **EP 1 602 090 B1**
(45) Veröffentlichungstag und Bekanntmachung des Hinweises auf die Patenterteilung: **23.07.2008**
(21) Anmeldenummer: 04705788.0
(22) Anmeldetag: 28.01.2004
(51) Int. Cl.: G08B 13/24

(54) **SICHERHEITSETIKETT UND VERFAHREN ZUR SICHERUNG VON GEGENSTÄNDEN**
SECURITY LABEL AND METHOD FOR SAFEGUARDING OBJECTS
ETIQUETTE DE SECURITE ET PROCEDE POUR PROTEGER DES OBJETS

(30) Priorität: 07.03.2003 DE 10310135
(43) Veröffentlichungstag der Anmeldung: 07.12.2005
(73) Patentinhaber: Checkpoint Systems International GmbH, 69434 Hirschhorn/Neckar (DE)
(72) Erfinder: DUSCHEK, Detlef, 64759 Sensbachtal (DE)
(74) Vertreter: Menges, Rolf
(86) Internationale Anmeldenummer: PCT/EP2004/000753
(87) Internationale Veröffentlichungsnummer: WO 2004/079683

(56) Entgegenhaltungen:
- EP-A- 0 354 759
- DE-U- 20 110 222
- US-A1- 2002 135 481

## Beschreibung

Die Erfindung betrifft ein Sicherheitsetikett zur Sicherung von Gegenständen gegen Diebstahl mit zumindest einem, vorzugsweise elektronisch detektierbaren Sicherungselement und mindestens einer das Sicherungselement vollständig überdeckenden Deckschicht, welche mit einem Klebstoff versehen und auf einen zu sichernden Gegenstand aufklebbar ist, wobei die Deckschicht vollständig von einem Etikett aus reißfähigem Material überdeckt und das Etikett auf seiner der Deckschicht zugewandten Seite mit einem Klebstoff versehen ist, der eine zumindest etwas geringere Klebkraft als der auf die Deckschicht aufgebrachte Klebstoff aufweist. Die Erfindung betrifft ferner ein Verfahren zur Sicherung von Gegenständen gegen Diebstahl mittels zumindest eines, vorzugsweise elektronisch, detektierbaren Sicherungselementes, welches an dem zu sichernden Gegenstand befestigt wird, wobei das Sicherungselement mittels einer Deckschicht, die mit einem Klebstoff versehen ist, direkt auf dem Gegenstand fixiert wird, wobei mit der Deckschicht das Sicherungselement vollständig überdeckt wird, und wobei mit einem Etikett aus reißfähigem Material, das mit einem Klebstoff versehen ist, der eine zumindest etwas geringere Klebkraft als der auf die Deckschicht aufgebrachte Klebstoff aufweist, die Deckschicht vollständig überdeckt wird.

Sicherheitsetiketten der eingangs genannten Art sowie entsprechende Verfahren zur Sicherung von Gegenständen gegen Diebstahl sind zur Sicherung von Verkaufsartikeln oder Leihartikeln wie beispielsweise Videokassetten bekannt. An den Artikeln ist dabei ein Sicherungselement befestigt, bei dem es sich beispielsweise um einen elektrischen Schwingkreis handeln kann. Bei dem Versuch, einen unbezahlten Artikel aus den Verkaufsräumen zu entfernen, löst das Sicherungselement bei dem Passieren von üblicherweise in der Nähe des Ausganges aufgestellten Nachweisgeräten einen Alarm aus. Wird der Artikel dagegen bezahlt und damit rechtmäßig erworben, muss das Sicherungselement von dem Artikel entfernt werden, um den Alarm zu vermeiden. Alternativ können die Sicherungselemente auch deaktivierbar ausgebildet sein, so dass diese beim Bezahlen des Artikels lediglich deaktiviert werden müssen und am Artikel verbleiben können. Dies ist insbesondere bei Leihartikeln sinnvoll, da nach der Zurückgabe des Artikels kein neues Sicherungselement an dem Artikel befestigt werden muss, sondern das noch vorhandene Sicherungselement einfach erneut aktiviert werden kann.

Ein Nachteil solcher Verfahren ist, dass die Sicherungselemente entweder sichtbar an dem Artikel befestigt sind oder von erfahrenen Dieben leicht lokalisiert werden können. Bei ausreichender krimineller Energie braucht ein potentieller Dieb das lokalisierte Sicherungselement nur von dem Artikel zu entfernen, um den Verkaufsraum mit dem nunmehr ungesicherten Artikel unbemerkt verlassen zu können. Insbesondere Sicherungselemente, die auf bekannte Weise mittels einer oder mehrerer Plastikfolien auf die Artikel aufgeklebt werden, sind leicht von diesen zu entfernen.

Aus der FR-A-2 614 109 ist ein Sicherheitsetikett zur Sicherung von Gegenständen gegen Diebstahl bekannt, das elektronisch detektierbare Sicherungselemente aufweist, die in ein Substrat eingebettet sind, welches mit einem Klebstoff versehen und auf einen zu sichernden Gegenstand aufklebbar ist, wobei das Substrat vollständig von einem Etikett aus reißfähigem Material überdeckt und das Etikett auf seiner dem Substrat zugewandten Seite mit einem Klebstoff versehen ist, der eine zumindest etwas geringere Klebkraft als der auf das Substrat aufgebrachte Klebstoff aufweist.

Aus der EP-A-0 446 910 ist ferner ein Sicherheitsetikett bekannt, das aus einem elektronisch detektierbaren, deaktivierbaren Sicherungselement und einer dieses überdeckenden selbstklebenden Deckschicht besteht. Das deaktivierbare Sicherungselement besteht aus einem weichmagnetischen Streifenelement, auf das rechteckige Elemente aus hartmagnetischem Material aufgebracht sind. Dieses Sicherungselement ist zu Lagerungs- und Transportzwecken auf einen Abziehstreifen aufgeklebt. Das Sicherungselement wird auf der anderen Seite von einer Deckschicht aus Papier oder Kunststoff vollständig überdeckt, wobei die Deckschicht auf ihrer dem Sicherungselement zugewandten Seite mit einer Klebstoffschicht versehen ist. Wird der Abziehstreifen entfernt, kann das Sicherungselement mit der dann freiliegenden Klebstoffschicht auf einen zu sichernden Gegenstand aufgeklebt werden. Auch dieses bekannte Sicherheitsetikett hat den Nachteil, dass es relativ leicht von dem zu sichernden Gegenstand abgelöst werden kann.

Aufgabe der Erfindung ist es, ein Sicherheitsetikett und ein Verfahren der eingangs genannten Art zu schaffen, bei denen ein Entfernen des Sicherungselementes von dem gesicherten Gegenstand nicht oder nur sehr schwer möglich ist.

Die Aufgabe wird mit einem Sicherheitsetikett der eingangs genannten Art erfindungsgemäß dadurch gelöst, dass die Deckschicht auf ihrer dem Sicherungselement zugewandten Seite mit dem Klebstoff versehen und auf das Sicherungselement aufklebbar ist und dass das Etikett die Deckschicht derart überdeckt, dass es auf den zu sichernden Gegenstand aufklebbar ist.

Erfindungsgemäß ist also die Deckschicht, mittels derer das Sicherungselement auf dem Artikel befestigt ist, vollständig von einer weiteren Schicht überdeckt. Wenn ein potentieller Dieb das Sicherungselement von dem Artikel entfernen will, muss er daher zunächst die zusätzliche Schicht entfernen, die durch ein Etikett aus reißfähigem Material gebildet ist. Die Klebkraft des Klebstoffes, mit dem das Etikett auf die Deckschicht und den Artikel aufgeklebt ist, ist dabei zumindest etwas geringer als die Klebkraft des Klebstoffes, mit der die Deckschicht auf dem Sicherungselement und dem Artikel aufgeklebt ist. Die Deckschicht kann also aufgrund der unterschiedlichen Klebstoffe nicht gleichzeitig mit dem Etikett von dem Artikel bzw. von dem Sicherungselement abgezogen werden. Die Klebkraft des Klebstoffes des Etiketts sollte dabei so stark sein, dass das Etikett zerreißt oder sich spaltet, wenn versucht wird, dieses von dem Artikel zu entfernen. Auf diese Weise ist nur ein mühsames, stückweises Entfernen des Etiketts möglich. Bei dem Versuch, das Etikett von dem Artikel zu entfernen, verbleiben stets eine Klebstoffschicht und ein Teil des Etiketts auf dem Artikel. Sollte es einem potentiellen Dieb dennoch gelingen, das Etikett teilweise zu entfernen, so bliebe immer noch die Deckschicht mit dem stärkeren Klebstoff auf dem Artikel haften. Die gesamte Prozedur ist also für einen potentiellen Dieb so zeitraubend, dass dieser von seinem Vorhaben ablässt und den Artikel im Verkaufsraum belässt. Darüber hinaus wird durch das Erschweren des Entfernens des Sicherungselementes die Wahrscheinlichkeit erhöht, dass der potentielle Dieb durch das Verkaufspersonal oder einen Detektiv entdeckt wird.

In vorteilhafter Ausgestaltung der Erfindung ist vorgesehen, dass die Deckschicht mit einem sehr stark haftenden Klebstoff versehen ist. Der Klebstoff sollte dabei so ausgewählt werden, dass ein Entfernen der Deckschicht und damit des Sicherungselementes von dem zu sichernden Gegenstand nicht oder nur unter sehr großem Aufwand möglich ist. Die Klebkraft sollte dabei deutlich höher sein als die Klebkraft des Klebstoffes, mit dem das Etikett versehen ist. Durch diese Maßnahme wird sichergestellt, dass die Deckschicht auf jeden Fall auf dem Gegenstand haften bleibt, wenn ein potentieller Dieb versucht, das Etikett zu entfernen.

In besonders vorteilhafter Ausgestaltung der Erfindung ist vorgesehen, dass die Deckschicht eine Kunststofffolie, vorzugsweise Polyesterfolie, ist und/oder das Etikett aus Papier oder aus leicht zerreißbarem und/oder perforiertem Kunststoff besteht. Durch die Verwendung einer Kunststofffolie als Deckschicht, insbesondere einer strapazierfähigen Polyesterfolie, ist gewährleistet, dass das Sicherungselement geschützt, sicher und dauerhaft auf dem zu sichernden Gegenstand angebracht ist. Wenn das Etikett aus Papier oder ebenfalls leicht zerreißbarem Kunststoff besteht, kann es nicht in einem Stück von dem Gegenstand und der Deckschicht abgezogen werden. Ein derart ausgestaltetes Etikett wird vielmehr beim Versuch, es abzuziehen, in kleine Stücke zerreißen, so dass es eine sehr lange Zeit in Anspruch nimmt, es vollständig zu entfernen. Ein Etikett aus Kunststoff kann dabei auch über seine Fläche verteilt ungleichmäßig perforiert sein, so dass Sollbruchlinien entstehen, die ein Abziehen in einem Stück unmöglich machen. Besteht das Etikett aus Papier, so ist das Papier vorzugsweise mehrlagig ausgebildet, so dass es sich bei dem Versuch des Abziehens spaltet. Auf diese Weise muss ein potentieller Dieb das Etikett praktisch Schicht für Schicht entfernen, was den Zeitaufwand weiter deutlich erhöht. Im Idealfall verbleibt dabei die letzte dünne Papierschicht, die mit dem Klebstoff versehen ist, auf dem zu sichernden Gegenstand. Eine solch dünne Papierschicht lässt sich erfahrungsgemäß in kurzer Zeit nicht vollständig von einem Gegenstand entfernen. Auf diese Weise wird es einem potentiellen Dieb praktisch unmöglich, das Sicherungselement von dem zu sichernden Gegenstand zu entfernen.

Um die Detektionsrate zu erhöhen, kann zwischen der Deckschicht und dem Etikett ein zweites Sicherungselement angeordnet sein, welches auf einer der Deckschicht zugewandten Seite mit einem Klebstoff versehen ist und welches die Deckschicht zumindest teilweise überdeckt. Dabei ist das zweite Sicherungselement vorzugsweise derart dimensioniert, dass es mit seiner Klebstoffschicht zu großen Teilen auf dem zu sichernden Gegenstand aufgeklebt ist. Dadurch, dass es das erste Sicherungselement zumindest teilweise überdeckt, ist dieses zusätzlich geschützt. Alternativ ist es auch möglich, unterschiedliche Schichten aus weichmagnetischem und hartmagnetischem Material als Sicherungselemente einzusetzen, wodurch ein wiederholtes Aktivieren und Deaktivieren der Sicherungselemente möglich ist, was insbesondere bei der Sicherung von Leihartikeln vorteilhaft ist.

Wenn bei dem Vorhandensein eines zweiten Sicherungselementes dieses ebenfalls mit einem stark haftenden Klebstoff versehen ist, dessen Klebkraft zumindest etwas größer als die Klebkraft des auf dem Etikett aufgebrachten Klebstoffes ist, dann kann das zweite Sicherungselement ebenfalls nicht gleichzeitig mit dem Etikett entfernt werden. In vorteilhafter Ausgestaltung der Erfindung sollte dabei die Klebstoffschicht des zweiten Sicherungselementes gleichzeitig eine geringere Klebkraft als der Klebstoff aufweisen, der auf der Deckschicht aufgebracht ist. In einer solchen Ausführungsform liegt praktisch eine Abstufung der Schichten hinsichtlich ihrer Klebkraft vor, so dass jede Schicht von einem potentiellen Dieb einzeln entfernt werden muss. Hierdurch kann der Zeitaufwand für einen potentiellen Dieb weiter erhöht werden.

Bei der Verwendung eines zweiten Sicherungselementes sollte dieses ebenfalls vollständig von dem Etikett überdeckt sein, damit ein potentieller Dieb keinen Ansatzpunkt findet, dieses direkt zu entfernen, ohne vorher das Etikett entfernen zu müssen.

In vorteilhafter Ausgestaltung der Erfindung ist weiter vorgesehen, dass das Sicherungselement ein streifenförmiges Element ist und/oder dass das zweite Sicherungselement ein Dünnfilmelement ist. Das streifenförmige Sicherungselement ist dabei vorzugsweise deaktivierbar, so dass ein wiederholtes Aktivieren und Deaktivieren möglich ist, was insbesondere bei der Sicherung von Leihartikeln wie beispielsweise Videokassetten von Vorteil ist. Die Verwendung von Streifen- und/oder Dünnfilmelementen hat darüber hinaus den Vorteil, dass nur eine geringe Schichtdicke vorliegt, so dass das gesamte Sicherheitsetikett mit seiner geringen Stärke auf dem zu sichernden Gegenstand nicht störend wirkt.

Bei den Sicherungselementen kann es sich beispielsweise um elektromagnetische (EM-), akustomagnetische (AM-), Radiofrequenz- (RF-) oder Radiofrequenz-Identifizierungs- (RF-ID-) Elemente handeln. Es können also erfindungsgemäß unterschiedliche Arten von Sicherungselementen verwendet werden, wobei flach ausgestaltete Sicherungselemente bevorzugt sind. Die Verwendung von flachen Sicherungselementen, die keine störende Erhebung auf dem zu sichernden Gegenstand bilden, erhöht deren Lebensdauer, was insbesondere bei Leihartikeln von besonderer Bedeutung ist.

Das erfindungsgemäße Sicherheitsetikett ist erfindungsgemäß vorzugsweise auf einem Träger aufgebracht. Bei dem Träger kann es sich entweder um ein Trägerband oder einen gesicherten Gegenstand handeln.

Die Aufgabe wird erfindungsgemäß ferner durch ein Verfahren der eingangs genannten Art gelöst, bei dem die Deckschicht auf das Sicherungselement aufgeklebt wird und das Etikett die Deckschicht derart überdeckt, dass es auf den zu sichernden Gegenstand aufgeklebt wird.

Die Deckschicht wird dabei vorzugsweise mit einem sehr stark haftenden Klebstoff versehen, wobei als Deckschicht beispielsweise eine Kunststofffolie, vorzugsweise Polyesterfolie, auf den Gegenstand geklebt werden kann.

Als Etikett wird bevorzugt ein Papieretikett, insbesondere aus mehrlagigem Papier, oder ein Kunststoffetikett aus leicht zerreißbarem und/oder perforiertem Kunststoff auf den Gegenstand und die Deckschicht geklebt.

Dabei kann in einer besonderen Ausgestaltung der Erfindung zuvor ein zweites Sicherungselement zumindest teilweise über die Deckschicht geklebt werden, dessen der Deckschicht zugewandte Seite ebenfalls mit einem stark haftenden Klebstoff versehen ist, dessen Klebkraft zumindest etwas größer als die Klebkraft des auf das Etikett aufgebrachten Klebstoffes ist, wobei dann das zweite Sicherungselement und ein noch freibleibender Teil der Deckschicht mit dem Etikett vollständig überdeckt werden.

Die Erfindung wird im Folgenden anhand der Figuren beispielhaft näher erläutert. Es zeigen:
- Fig. 1: eine perspektivische Ansicht eines durch eine erste Ausführungsform des Sicherheitsetiketts nach der Erfindung gesicherten Gegenstandes,
- Fig. 2: eine perspektivische Ansicht eines durch eine zweite Ausführungsform des Sicherheitsetiketts nach der Erfindung gesicherten Gegenstandes, wobei ein zwei Sicherungselemente überdeckendes Etikett nicht dargestellt ist, und
- Fig. 3: eine perspektivische Ansicht des Gegenstandes nach Fig. 2 mit dem vollständig dargestellten erfindungsgemäßen Sicherheitsetikett.

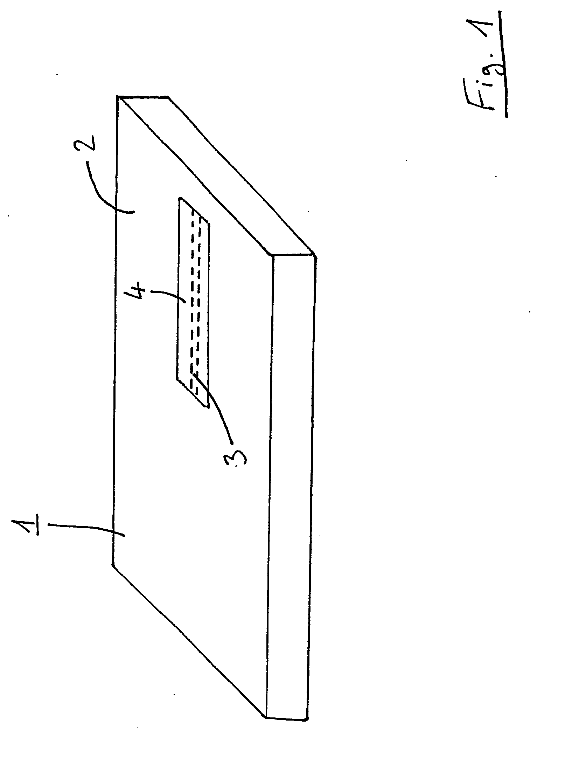

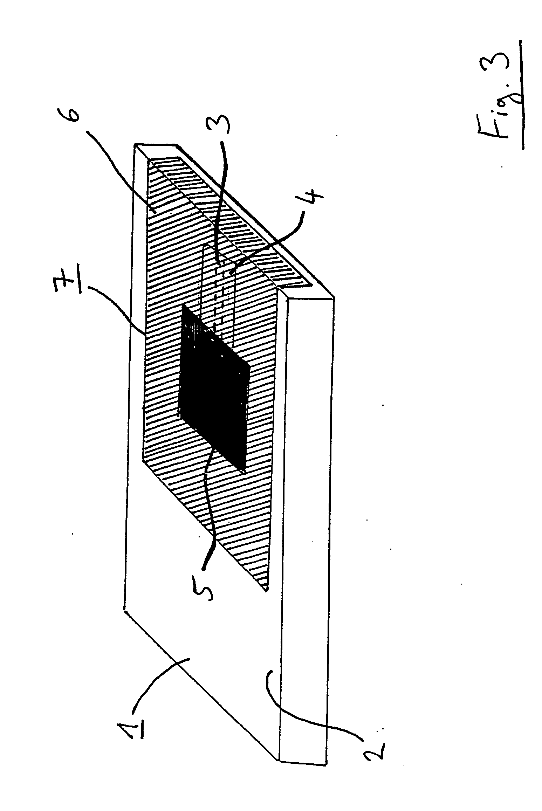

Fig. 1 zeigt einen durch eine erste Ausführungsform des Sicherheitsetiketts 7 nach der Erfindung gesicherten Gegenstand 1, bei dem es sich beispielsweise um eine Videokassette handeln kann. Auf die Oberfläche 2 des Gegenstandes 1 ist ein Sicherungselement 3 aufgebracht. Bei dem Sicherungselement 3 handelt es sich um ein streifenförmiges, elektromagnetisches (EM-) Element, das vorzugsweise deaktivierbar ist. Ein solches Streifenelement kann beispielsweise eine Breite von ca. 0,7 mm aufweisen. Das Sicherungselement 3 ist mittels einer Deckschicht 4 auf der Oberfläche 2 befestigt. Das Sicherungselement 3 liegt also direkt auf der Oberfläche 2 des zu sichernden Gegenstandes 1 auf und wird mittels der Deckschicht 4 auf dem Gegenstand 1 fixiert. Die Deckschicht 4 ist hier eine Polyesterfolie, die beispielsweise eine Stärke von 50 µm aufweisen kann. Die Deckschicht 4 überragt das Sicherungselement 3 an beiden Längsseiten, so dass diese mit ihrer auf der dem Sicherungselement 3 zugewandten Seite aufgebrachten Klebstoffschicht sicher auf der Oberfläche 2 haftet. Die Deckschicht 4 kann beispielsweise eine Breite von ca. 5 mm aufweisen. Die Deckschicht 4 ist mit einem sehr stark haftenden Klebstoff auf der Oberfläche 2 und das Sicherungselement 3 aufgeklebt. Die Deckschicht 4 wird von einem Etikett 6, das mit Bezug auf Fig. 3 näher beschrieben wird, vollständig überdeckt.

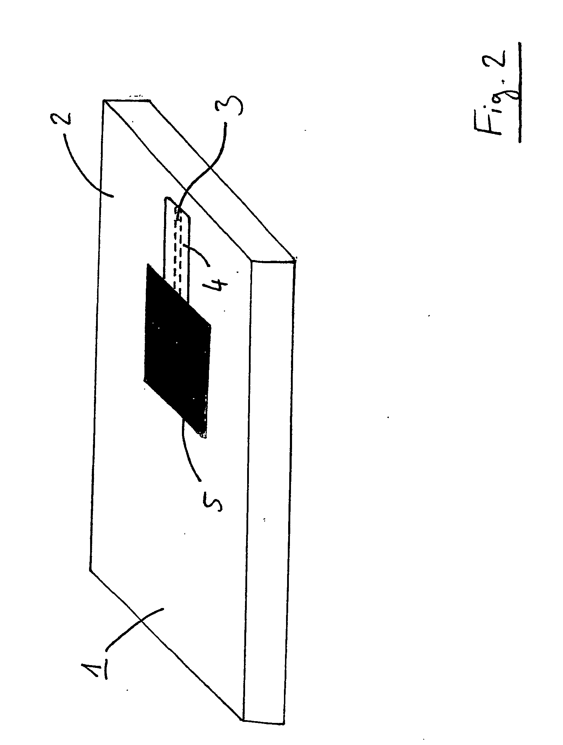

Fig. 2 zeigt den zu sichernden Gegenstand 1 mit einem mittels der Deckschicht 4 fixierten ersten Sicherungselement 3. Über die Deckschicht 4 ist teilweise ein zweites Sicherungselement 5 geklebt. Bei dem zweiten Sicherungselement 5 handelt es sich um ein Dünnfilmelement, das auf seiner der Oberfläche 2 zugewandten Seite mit einem stark haftenden Klebstoff beschichtet ist. Das zweite Sicherungselement 5 weist im vorliegenden Beispiel eine Fläche von 20 x 28 mm auf und überragt damit die Deckschicht 4 auf drei Seiten. Hierdurch kann der auf das zweite Sicherungselement 5 aufgebrachte Klebstoff großflächig auf der Oberfläche 2 haften. Die Klebkraft des auf das zweite Sicherungselement 5 aufgebrachten Klebstoffes ist vorzugsweise etwas geringer als die Klebkraft des Klebstoffes, mit dem die Deckschicht 4 auf die Oberfläche 2 aufgeklebt ist. Die Klebkräfte der Klebstoffe der Deckschicht 4 und des zweiten Sicherungselementes 5 können aber in alternativer Ausgestaltung auch etwa gleich groß sein. Es können also zur Fixierung des ersten Sicherungselementes 3 und zum Aufkleben des zweiten Sicherungselementes 5 gleiche oder unterschiedliche Klebstoffe verwendet werden. Das Etikett 6, welches das zweite Sicherungselement 5 und die Deckschicht 4, soweit diese nicht durch das zweite Sicherungselement 5 bedeckt ist, vollständig überdeckt, ist in Fig. 2 nicht dargestellt.

Fig. 3 zeigt den zu sichernden Gegenstand 1 nach Fig. 2, bei dem nun die beiden Sicherungselemente 3, 5 sowie die Deckschicht 4 vollständig von einem Etikett 6 überdeckt sind. Das Etikett 6 ist auf seiner der Oberfläche 2 bzw. der Deckschicht 4 zugewandten Seite mit einem Klebstoff versehen. Mit diesem Klebstoff ist das Etikett 6 großflächig auf der Oberfläche 2 aufgeklebt. Dabei überdeckt es die Deckschicht 4 und das zweite Sicherungselement 5 vollständig. Das vollständige Sicherheitsetikett 7' besteht also im vorliegenden Ausführungsbeispiel aus dem ersten Sicherungselement 3, einer Deckschicht 4, dem zweiten Sicherungselement 5 und dem Etikett 6. Der Klebstoff, mit dem das Etikett 6 auf der Oberfläche 2 haftet, weist dabei eine geringere Klebkraft auf als der auf die Deckschicht aufgebrachte Klebstoff. Vorteilhafterweise weist der auf das Etikett 6 aufgebrachte Klebstoff auch eine geringere Klebkraft auf als der auf das zweite Sicherungselement 5 aufgebrachte Klebstoff. Auf diese Weise ist sichergestellt, dass sich bei dem Versuch, das Sicherheitsetikett 7' zu entfernen, zunächst nur das Etikett 6 ablöst, wohingegen das zweite Sicherungselement 5 und das erste Sicherungselement 3 auf dem zu sichernden Gegenstand 1 haften bleiben. Das Etikett 6 besteht dabei vorzugsweise aus Papier, insbesondere mehrlagigem Papier, so dass es sich bei dem Versuch, das Sicherheitsetikett 7' zu entfernen, spaltet und zerreißt. Es nimmt also einige Zeit in Anspruch, bis wesentliche Teile des Etiketts 6 entfernt sind. Bei der Verwendung von mehrlagigem Papier verbleibt dabei idealerweise die unterste dünne Schicht gemeinsam mit der Klebstoffschicht auf der Oberfläche 2. Aber selbst dann, wenn es einem potentiellen Dieb gelingen sollte, große Teile des Etiketts 6 von der Oberfläche zu entfernen, verblieben immer noch die Sicherungselemente 3, 5 auf der Oberfläche 2, da diese mit sehr stark haftenden Klebstoffen auf die Oberfläche 2 aufgeklebt sind. Insgesamt vergeht bei dem Versuch, das Sicherheitsetikett 7' von dem zu sichernden Gegenstand 1 zu entfernen, so viel Zeit, dass der potentielle Dieb entweder entdeckt wird oder entnervt aufgibt. Das Etikett 6 hat bei der Ausführungsform des Sicherheitsetiketts 7 nach Fig. 1 den gleichen Aufbau wie bei der Ausführungsform des Sicherheitsetiketts 7' nach den Fig. 2 und 3.

### Bezugszeichenliste

- 1: Gegenstand
- 2: Oberfläche
- 3: erstes Sicherungselement
- 4: Deckschicht
- 5: zweites Sicherungselement
- 6: Etikett
- 7, 7': Sicherheitsetikett

## Patentansprüche

1. Sicherheitsetikett (7) zur Sicherung von Gegenständen gegen Diebstahl mit zumindest einem, vorzugsweise elektronisch, detektierbaren Sicherungselement (3) und mindestens einer das Sicherungselement (3) vollständig überdeckenden Deckschicht (4), welche mit einem Klebstoff versehen und auf einen zu sichernden Gegenstand (1) aufklebbar ist, wobei die Deckschicht (4) vollständig von einem Etikett (6) aus reißfähigem Material überdeckt und das Etikett (6) auf seiner der Deckschicht (4) zugewandten Seite mit einem Klebstoff versehen ist, der eine zumindest etwas geringere Klebkraft als der auf die Deckschicht (4) aufgebrachte Klebstoff aufweist, **dadurch gekennzeichnet, dass** die Deckschicht (4) auf ihrer dem Sicherungselement (3) zugewandten Seite mit dem Klebstoff versehen und auf das Sicherungselement (3) aufklebbar ist und dass das Etikett (6) die Deckschicht (4) derart überdeckt, dass es auf den zu sichernden Gegenstand (1) aufklebbar ist.

2. Sicherheitsetikett nach Anspruch 1, **dadurch gekennzeichnet, dass** die Deckschicht (4) mit einem sehr stark haftenden Klebstoff versehen ist.

3. Sicherheitsetikett nach Anspruch 1 oder 2, **dadurch gekennzeichnet, dass** die Deckschicht (4) eine Kunststofffolie, vorzugsweise eine Polyesterfolie ist.

4. Sicherheitsetikett nach einem der Ansprüche 1 bis 3, **dadurch gekennzeichnet, dass** das Etikett (6) aus, vorzugsweise mehrlagigem, Papier oder aus leicht zerreißbarem und/oder perforiertem Kunststoff besteht.

5. Sicherheitsetikett nach einem der Ansprüche 1 bis 4, **dadurch gekennzeichnet, dass** zwischen der Deckschicht (4) und dem Etikett (6) ein zweites Sicherungselement (5) angeordnet ist, welches auf einer der Deckschicht (4) zugewandten Seite mit einem Klebstoff versehen ist und welches die Deckschicht (4) zumindest teilweise überdeckt.

6. Sicherheitsetikett nach Anspruch 5, **dadurch gekennzeichnet, dass** das zweite Sicherungselement (5) ebenfalls mit einem stark haftenden Klebstoff versehen ist, dessen Klebkraft zumindest etwas größer als die Klebkraft des auf das Etikett (6) aufgebrachten Klebstoffes ist.

7. Sicherheitsetikett nach Anspruch 5 oder 6, **dadurch gekennzeichnet, dass** das Etikett (6) das zweite Sicherungselement (5) und die Deckschicht (4) vollständig überdeckt.

8. Sicherheitsetikett nach einem der Ansprüche 5 bis 7, **dadurch gekennzeichnet, dass** das zweite Sicherungselement (5) ein Dünnfilmelement ist.

9. Sicherheitsetikett nach einem der Ansprüche 1 bis 8, **dadurch gekennzeichnet, dass** das Sicherungselement (3) ein streifenförmiges, vorzugsweise deaktivierbares, Element ist.

10. Sicherheitsetikett nach einem der Ansprüche 1 bis 9, **dadurch gekennzeichnet, dass** das Sicherungselement (3, 5) ein EM-, AM-, RF- oder RF-ID-Element ist.

11. Sicherheitsetikett nach einem der Ansprüche 1 bis 10, **dadurch gekennzeichnet, dass** dieses auf einen Träger aufgebracht ist.

12. Sicherheitsetikett nach Anspruch 11, **dadurch gekennzeichnet, dass** der Träger ein Trägerband oder ein gesicherter Gegenstand (1) ist.

13. Verfahren zur Sicherung von Gegenständen gegen Diebstahl mittels zumindest eines, vorzugsweise elektronisch, detektierbaren Sicherungselementes, welches an dem zu sichernden Gegenstand befestigt wird, wobei das Sicherungselement (3) mittels einer Deckschicht (4), die mit einem Klebstoff versehen ist, direkt auf dem Gegenstand (1) fixiert wird, wobei mit der Deckschicht (4) das Sicherungselement (3) vollständig überdeckt wird, und wobei mit einem Etikett (6) aus reißfähigem Material, das mit einem Klebstoff versehen ist, der eine zumindest etwas geringere Klebkraft als der auf die Deckschicht (4) aufgebrachte Klebstoff aufweist, die Deckschicht (4) vollständig überdeckt wird, **dadurch gekennzeichnet, dass** die Deckschicht (4) auf das Sicherungselement (3) aufgeklebt wird und dass das Etikett (6) die Deckschicht (4) derart überdeckt, dass es auf den zu sichernden Gegenstand (1) aufgeklebt wird.

14. Verfahren nach Anspruch 13, **dadurch gekennzeichnet, dass** die Deckschicht (4) mit einem sehr stark haftenden Klebstoff versehen wird und/oder dass als Deckschicht (4) eine Kunststofffolie, vorzugsweise Polyesterfolie, auf den Gegenstand (1) geklebt wird.

15. Verfahren nach Anspruch 13 oder 14, **dadurch gekennzeichnet, dass** als Etikett (6) ein Papieretikett, vorzugsweise aus mehrlagigem Papier, oder ein Kunststoffetikett aus leicht zerreißbarem und/oder perforiertem Kunststoff auf den Gegenstand (1) und die Deckschicht (4) geklebt wird.

16. Verfahren nach einem der Ansprüche 13 bis 15, **dadurch gekennzeichnet, dass** ein zweites Sicherungselement (5) zumindest teilweise über die Deckschicht (4) geklebt wird, dessen der Deckschicht (4) zugewandte Seite ebenfalls mit einem stark haftenden Klebstoff versehen ist, dessen Klebkraft zumindest etwas größer als die Klebkraft des auf das Etikett (6) aufgebrachten Klebstoffes ist, und dass dann das zweite Sicherungselement (5) und ein noch freiliegender Teil der Deckschicht (4) mit dem Etikett (6) vollständig überdeckt werden.

## Claims

1. A security tag (7) for protecting objects against theft, with at least one, preferably electronically detectable security element (3) and at least one covering layer (4) covering the security element (3) completely and being provided with an adhesive for being adhered to an object (1) to be secured, said covering layer (4) being covered completely with a label (6) made of tearable material and said label (6) having applied to its side facing the covering layer (4) an adhesive whose bonding strength is at least somewhat lower than that of the adhesive applied to the covering layer (4), **characterized in that** the adhesive is applied to the side of the covering layer (4) facing the security element (3) and is adapted to be adhered to the security element (3), and that the label (6) covers the covering layer (4) in such a way that it is capable of being adhered to the object (1) to be secured.

2. The security tag as claimed in claim 1, **characterized in that** the covering layer (4) is provided with a very strongly adhering adhesive.

3. The security tag as claimed in claim 1 or 2, **characterized in that** the covering layer (4) is a plastic film, preferably a polyester film.

4. The security tag as claimed in any one of the claims 1 to 3, **characterized in that** the label (6) is made of preferably multi-layered paper or of an easily tearable and/or perforated plastics material.

5. The security tag as claimed in any one of the claims 1 to 4, **characterized in that** a second security element (5) is arranged between the covering layer (4) and the label (6), which second security element is provided with an adhesive on one side facing the covering layer (4) and overlaps the covering layer (4) at least in part.

6. The security tag as claimed in claim 5, **characterized in that** the second security element (5) is equally provided with a strongly adhering adhesive whose bonding strength is at least somewhat greater than the bonding strength of the adhesive applied to the label (6).

7. The security tag as claimed in claim 5 or 6, **characterized in that** the label (6) completely covers the second security element (5) and the covering layer (4).

8. The security tag as claimed in any one of the claims 5 to 7, **characterized in that** the second security element (5) is a thin-film element.

9. The security tag as claimed in any one of the claims 1 to 8, **characterized in that** the security element (3) is a strip-shaped, preferably deactivatable element.

10. The security tag as claimed in any one of the claims 1 to 9, **characterized in that** the security element (3, 5) is an EM, AM, RF or RF-ID element.

11. The security tag as claimed in any one of the claims 1 to 10, **characterized in that** it is affixed to a substrate.

12. The security tag as claimed in claim 11, **characterized in that** the substrate is a carrier web or a secured object (1).

13. A method of protecting objects against theft by means of at least one, preferably electronically detectable security element which is attached to the object to be protected, said security element (3) being fixed directly to the object (1) by means of a covering layer (4) provided with an adhesive, said covering layer (4) covering the security element (3) completely, and wherein a label (6) of tearable material provided with an adhesive whose bonding strength is at least somewhat lower than that of the adhesive applied to the covering layer (4) covers the covering layer (4) completely, **characterized by** the steps of adhering the covering layer (4) to the security element (3) and covering the covering layer (4) with the label (6) such that it is adhered to the object (1) to be secured.

14. The method as claimed in claim 13, **characterized by** the step of providing the covering layer (4) with a very strongly adhering adhesive and/or adhering as covering layer (4) a plastic film, preferably a polyester film, to the object (1).

15. The method as claimed in claim 13 or 14, **characterized by** the step of adhering as label (6) a paper label, preferably of multi-layered paper, or a plastic label made of an easily tearable and/or perforated plastics material to the object (1) and the covering layer (4).

16. The method as claimed in any one of the claims 13 to 15, **characterized by** the steps of adhering a second security element (5) over at least part of the covering layer (4), whose side facing the covering layer (4) is likewise provided with a strongly adhering adhesive having a bonding strength at least somewhat greater than the bonding strength of the adhesive applied to the label (6), and subsequently covering the second security element (5) and a still exposed part of the covering layer (4) completely with the label (6).

## Revendications

1. Etiquette de sécurité (7) destinée à sécuriser des objets contre le vol, comportant au moins un élément de sécurité (3) pouvant être détecté de préférence par voie électronique, et au moins une couche de recouvrement (4) recouvrant entièrement l'élément de sécurité (3), laquelle est dotée d'une colle et peut être collée sur un objet (1) à sécuriser, la couche de recouvrement (4) étant entièrement recouverte par une étiquette (6) en matière susceptible d'être déchirée et, sur sa face orientée vers la couche de recouvrement (4), l'étiquette (6) étant pourvue d'une colle dont la force d'adhérence est au moins légèrement inférieure à celle de la colle appliquée sur la couche de recouvrement (4), **caractérisée en ce que** la couche de recouvrement (4) est pourvue de la colle sur sa face orientée vers l'élément de sécurité (3), et peut être collée sur l'élément de sécurité (3), et **en ce que** l'étiquette (6) recouvre la couche de recouvrement (4) de telle sorte qu'elle puisse être collée sur l'objet (1) à sécuriser.

2. Etiquette de sécurité selon la revendication 1, **caractérisée en ce que** la couche de recouvrement (4) est pourvue d'une colle à très forte adhérence.

3. Etiquette de sécurité selon la revendication 1 ou 2, **caractérisée en ce que** la couche de recouvrement (4) est un film en matière plastique, de préférence un film en polyester.

4. Etiquette de sécurité selon l'une des revendications 1 à 3, **caractérisée en ce que** l'étiquette (6) est en papier, de préférence multicouche, ou en matière plastique pouvant être facilement déchirée et/ou perforée.

5. Etiquette de sécurité selon l'une des revendications 1 à 4, **caractérisée en ce qu'**un deuxième élément de sécurité (5) est disposé entre la couche de recouvrement (4) et l'étiquette (6), lequel est doté d'une colle sur une face orientée vers la couche de recouvrement (4), et recouvre au moins partiellement la couche de recouvrement (4).

6. Etiquette de sécurité selon la revendication 5, **caractérisée en ce que** le deuxième élément de sécurité (5) est également pourvu d'une colle à très forte adhérence, dont la force d'adhésion est au moins légèrement supérieure à la force d'adhésion de la colle appliquée sur l'étiquette (6).

7. Etiquette de sécurité selon la revendication 5 ou 6, **caractérisée en ce que** l'étiquette (6) recouvre entièrement le deuxième élément de sécurité (5) et la couche de recouvrement (4).

8. Etiquette de sécurité selon l'une des revendications 5 à 7, **caractérisée en ce que** le deuxième élément de sécurité (5) est un élément à film mince.

9. Etiquette de sécurité selon l'une des revendications 1 à 8, **caractérisée en ce que** l'élément de sécurité (3) est un élément en forme de ruban pouvant de préférence être désactivé.

10. Etiquette de sécurité selon l'une des revendications 1 à 9, **caractérisée en ce que** l'élément de sécurité (3, 5) est un élément EM, AM, RF ou RF-ID.

11. Etiquette de sécurité selon l'une des revendications 1 à 10, **caractérisée en ce qu'**elle est appliquée sur un support.

12. Etiquette de sécurité selon la revendication 11, **caractérisée en ce que** le support est une bande de support ou un objet sécurisé (1) .

13. Procédé destiné à sécuriser des objets contre le vol au moyen d'au moins un élément de sécurité pouvant être détecté de préférence par voie électronique, qui est fixé sur l'objet à sécuriser, l'élément de sécurité (3) étant fixé directement sur l'objet (1) au moyen d'une couche de recouvrement (4) qui est pourvue d'une colle, l'élément de sécurité (3) étant entièrement recouvert par la couche de recouvrement (4), et la couche de recouvrement (4) étant entièrement recouverte par une étiquette (6) en matière susceptible d'être déchirée, qui est pourvue d'une colle dont la force d'adhésion est au moins légèrement inférieure à celle de la colle appliquée sur la couche de recouvrement (4), **caractérisé en ce que** la couche de recouvrement (4) est collée sur l'élément de sécurité (3), et **en ce que** l'étiquette (6) recouvre la couche de recouvrement (4) de telle sorte qu'elle soit collée sur l'objet (1) à sécuriser.

14. Procédé selon la revendication 13, **caractérisé en ce que** la couche de recouvrement (4) est pourvue d'une colle à très forte adhérence, et/ou **en ce qu'**un film en matière plastique, de préférence un film en polyester, est collé sur l'objet (1) en tant que couche de recouvrement (4).

15. Procédé selon la revendication 13 ou 14, **caractérisé en ce que**, en tant qu'étiquette (6), une étiquette en papier, de préférence en papier multicouche, ou une étiquette en matière plastique pouvant être facilement déchirée et/ou perforée, est collée sur l'objet (1) et la couche de recouvrement (4).

16. Procédé selon l'une des revendications 13 à 15, **caractérisé en ce qu'**un deuxième élément de sécurité (5) est collé, au moins partiellement, sur la couche de recouvrement (4), dont la face orientée vers la couche de recouvrement (4) est également pourvue d'une colle à très forte adhérence, dont la force d'adhésion est au moins légèrement supérieure à la force d'adhésion de la colle appliquée sur l'étiquette (6), et **en ce que** le deuxième élément de sécurité (5) et une partie encore dégagée de la couche de recouvrement (4) sont alors entièrement recouverts par l'étiquette (6).
